# EUROPEAN PATENT SPECIFICATION

(11) **EP 0 972 975 B1**
(45) Date of publication and mention of the grant of the patent: **09.07.2008**
(21) Application number: 99901947.4
(22) Date of filing: 05.02.1999
(51) Int. Cl.: F16K 1/22, F16K 41/00

(54) **HIGH-TEMPERATURE HIGH-PRESSURE LIQUID FLOW CONTROL VALVE AND METHOD OF PREVENTING FIXING OF ITS STEM**
DURCHFLUSSREGELVENTIL FÜR HOCHTEMPERATUR UND HOCHDRUCKBEREICH UND VERFAHREN UM DAS VERKLEMMEN DES VENTILSCHAFTES ZU VERHINDERN
SOUPAPE DE REGULATION DE LIQUIDE HAUTE TEMPERATURE ET HAUTE PRESSION, ET PROCEDE EMPECHANT L'IMMOBILISATION DE LA TIGE DE SOUPAPE

(30) Priority: 10.02.1998 JP 2839498; 31.08.1998 JP 24459198
(43) Date of publication of application: 19.01.2000
(73) Proprietor: JFE Steel Corporation, Chiyoda-ku Tokyo 100-0011 (JP); AGC Ceramics Company Limited, Minato-ku Tokyo 108-0014 (JP)
(72) Inventor: KITAGAWA, Mitsuhiro, NKK Corp., Tokyo 100-0005 (JP); SAITO, Norio, NKK Corp., Tokyo 100-0005 (JP); SATO, Kimihiko, Asahi Glass Co., Ltd., Takasago City, Hyogo 676-0074 (JP)
(74) Representative: Green, Mark Charles
(86) International application number: PCT/JP1999/000498
(87) International publication number: WO 1999/041533

(56) References cited:
- JP-A- 9 042 471
- JP-A- 61 278 666
- JP-U- 53 089 621
- JP-U- 59 020 066
- JP-Y2- 1 017 729
- JP-Y2- 63 046 771
- US-A- 3 448 761
- US-A- 4 311 166
- US-A- 4 380 246
- US-A- 4 697 615
- PATENT ABSTRACTS OF JAPAN vol. 0170, no. 88 (M-1370), 22 February 1993 (1993-02-22) & JP 4 285368 A (NKK CORP), 9 October 1992 (1992-10-09)

## Description

### TECHNICAL FIELD

The present invention relates to a flow control valve of a cartridge type which is easily attached to and removed from pipe arrangement for high-temperature high-pressure fluid, and a method for preventing a valve shaft thereof from seizing.

Such flow control valves are known for instance from US-A-4 697 615.

### BACKGROUND ART

High-temperature high-pressure compressed air (hereinafter referred to as hot air), which is, for example, at a temperature of 1,300°C and at a pressure of 340 kPa, is blown in from a tuyere of a blast furnace for iron manufacture at a high flow velocity which is, for example, 200 m/sec. Thirty to fifty tuyeres like the above one are provided in the outer circumference of the blast furnace, and the flow rate of hot air blown in from the tuyeres needs to be changed in accordance with the operating state of the blast furnace. To this end, there has been proposed a flow control value (butterfly valve) including a valve body made of ceramics consisting of a valve plate and a valve shaft which are integrated, as disclosed in JP-B-3-20628, JP-B-3-45264, JP-Y-1-17729 and JP-Y-63-46771. Such flow control valves have provided various effects in operations of blast furnaces.

In addition, JP-Y-63-46771 also discloses a valve body made of ceramics consisting of a valve plate and a valve shaft which are integrated and further shows a configuration in which a flow control valve is removably attached in a form of a cantilever, to a casing constituted by a short connecting pipe provided with a fluid flow path.

However, in a flow control valve disclosed in any of the above-mentioned publications, since a valve body is disposed in a flow path of a casing specially configured for supplying hot air, it is necessary to form the casing out of refractories in which strength and thermal insulation are taken into consideration. Accordingly, the manufacturing cost of the flow control valve itself becomes high. In addition, when the flow control valve is installed, it is necessary to redesign and remake pipe arrangement (for example, leg pipes) as a whole. Therefore, it used to take much time and cost. Further, since a work to replace the flow control valve have to be carried out in an undesirable environment and all the leg pipes have to be removed before reassembling them, it also used to take much time, labor and cost for maintenance.

Particularly, in the case that the flow control valve is configured to be a removable type in a form of a cantilever as disclosed in the above-mentioned JP-B-63-46771, the most serious problem is to seal a gap between a cross hole provided to communicate with the fluid flow path and a refractory plug inserted into the cross hole. Since extremely high-temperature high-pressure hot air is passing through the internal flow path as mentioned above, it is an essential condition to seal the above-mentioned gap without any leakage of the hot air. At the same time, the plug has to be attached and removed smoothly without damaging refractories constituting the flow path.

Furthermore, since hot air from a hot-blast stove for producing high-temperature high-pressure air includes brick dust, zinc alkali compounds, etc., such inclusion in the hot air may be stuck and fixed in a gap between the valve shaft of the valve body and a shaft hole of the refractory plug penetrated by the valve shaft to make the valve inoperative.

The present invention is intended to solve the foregoing problems. It is an object of the present invention to provide a flow control valve of a cartridge type which can be attached to pipe arrangement directly without using such a valve casing required in the background art, while the flow control valve ensures satisfactory sealing in a refractory plug portion which is an important problem for the cartridge type.

In addition, it is another object of the invention to prevent brick dust, zinc alkali compounds, etc from entering the gap between the valve shaft and the shaft hole of the refractory plug, so that the stable operation of the valve can be performed over a long period of time.

### DISCLOSURE OF THE INVENTION

A flow control valve for high-temperature high-pressure fluid is provided as defined in claim 1.

The words "a cartridge-type flow control valve" mean a flow control valve which does not have a valve casing constituted by a short pipe connected to pipe arrangement body such as a leg pipe, and which is so configured as to be able to replace at least a ceramics valve body and a refractory plug member easily.

In addition, the flow control valve for high-temperature high-pressure fluid according to the present invention may have the following features.

The plug member is constituted in a double structure in which an axially front portion of the plug member is formed of a high-strength refractory while an axially rear portion thereof is formed of an adiabatic refractory.

The plug member is formed into a truncated cone with a thinner front portion.

The first seal member is made out of heat-resistant fiber.

The valve driving means and the valve shaft are connected by a joint means.

The plug member is inserted into the aperture portion so that a front end surface of the plug member substantially meets an inner circumferential surface of the flow path wall.

A method of preventing seizing of a valve shaft of a flow control valve for high-temperature high-pressure fluid according to the present invention is characterized in that in any one of the above-mentioned flow control valves for high-temperature high-pressure fluid, heated gas is supplied to a gap between the valve shaft and the shaft hole of the plug member. As the heated gas, inert gas or air is used.

As means for carrying out the method, a space portion sealed with the third seal member and communicating with a gap between the valve shaft and the shaft hole of the plug member is provided inside the fixing member, and means for supplying heated gas is connected to the space portion.

With such configurations as described above, a cartridge-type flow control valve which does not need a casing for the valve can be obtained. Accordingly, the flow control valve becomes simple in configuration, and easy in attachment to and removal from pipe arrangement, so that the maintenance performance is improved. In addition, since the flow control valve is attached directly to the pipe arrangement through an aperture portion provided in a side of the pipe arrangement, it is not necessary to alter the pipe arrangement on a large scale. It is therefore possible to reduce the cost as a result.

Further, the first seal member made of heat-resistant fiber and attached to the outer circumferential surface of the truncated conical shape of the plug member is pressed against the tapered aperture portion when the plug member is inserted and attached. Accordingly, a gap between the plug member and the aperture portion is sealed uniformly by the first seal member. In addition, since the plug member is constituted in a double structure where the axially front portion is formed of a high-strength refractory and the axially rear portion is formed of an adiabatic refractory as mentioned above, heat conduction can be reduced so that an ordinary O-ring can be used for the second seal member as a result. Leakage of the high-temperature high-pressure fluid is surely prevented by the double seal means constituted by the first and second seal members. Furthermore, since the bearing member for the ceramics valve shaft is disposed in the fixing member to which the plug member is fixed and an ordinary gland packing can be used for the third seal member for sealing this bearing member, leakage of the fluid through a gap between the valve shaft and the shaft hole of the plug member can be also prevented surely by this third seal member. Therefore, the flow control valve is configured by the above three seal members to ensure satisfactory sealing performance which is the most essential problem in a cartridge type.

In addition, by supplying heated air, for example, heated inert gas such as nitrogen or hot air, to the gap between the valve shaft and the shaft hole of the plug member, dirt such as brick dust, zinc alkali compounds, etc. attempting to enter this gap from the inside of the pipe arrangement is prevented from entering, so as to prevent the valve shaft from seizing due to the dirt stuck in the gap.

### BRIEF DESCRIPTION OF THE DRAWINGS

Fig. 1 is a front sectional view of a flow control valve according to Embodiment 1 of the present invention.
Fig. 2 is a sectional side view of the flow control valve.
Fig. 3 is a sectional view showing a seal structure of the flow control valve.
Fig. 4 is a view showing a state in which the flow control valve is attached to a tuyere leg pipe.
Fig. 5 is a front sectional view of a flow control valve according to Embodiment 2 of the present invention.
Fig. 6 is an enlarged view of a main portion of Embodiment 2.
Figs. 7 shows a front sectional view and a side sectional view of a blind plug.

### THE BEST MODE FOR CARRYING OUT THE INVENTION

### Embodiment 1.

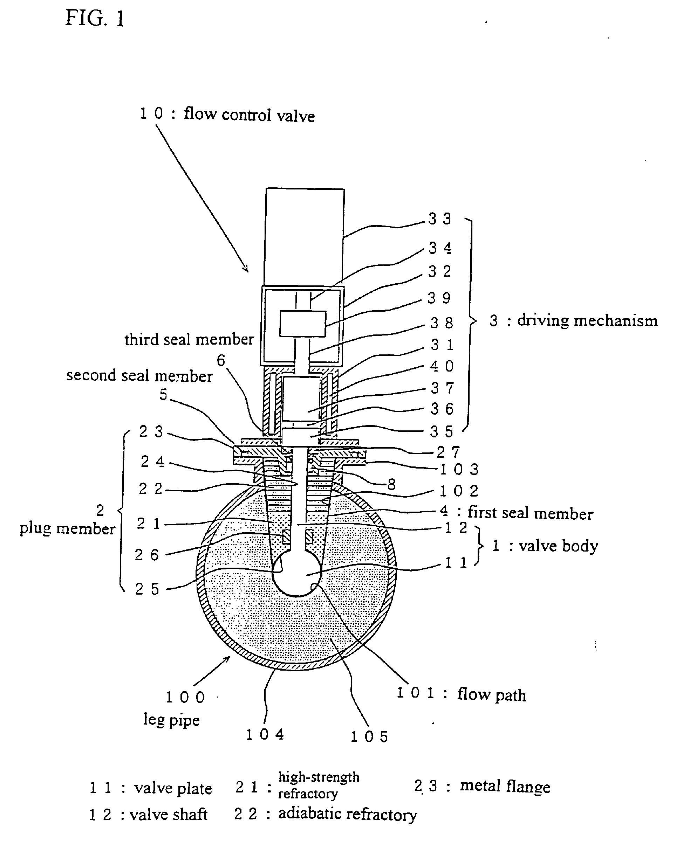

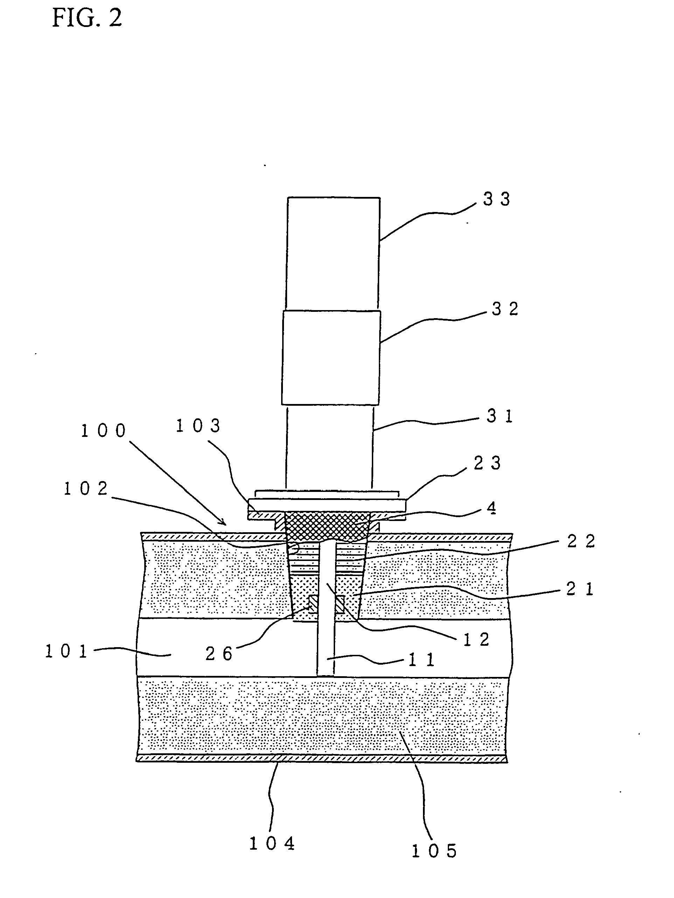

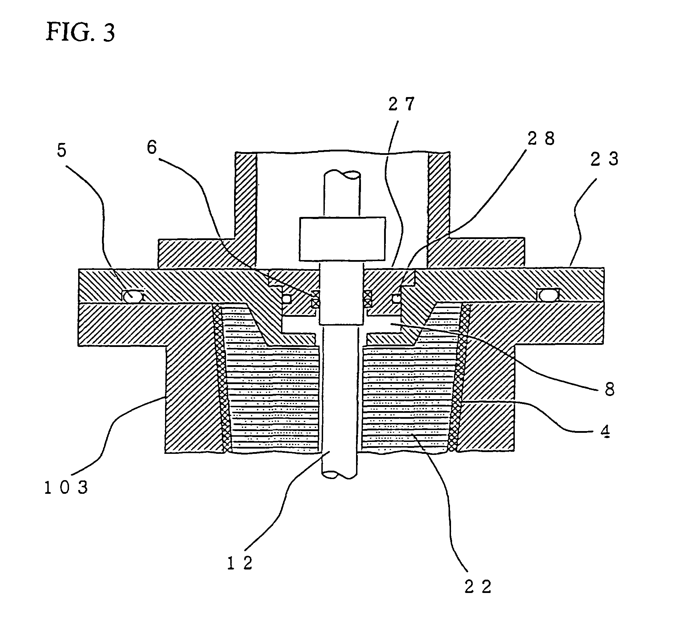

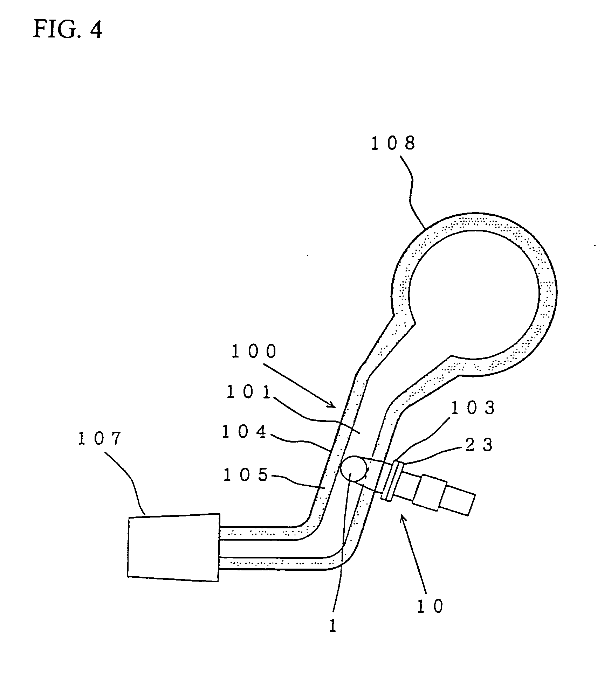

Fig. 1 is a front sectional view of a flow control valve according to Embodiment 1 of the present invention; Fig. 2 is a side sectional view thereof; Fig. 3 is an enlarged view of a main portion showing a seal means in the present invention; and Fig. 4 is an explanatory view showing a state in which this flow control valve is attached to a leg pipe as pipe arrangement.

This flow control valve 10 has a cartridge-type configuration having a valve body 1, a plug member 2 and a driving mechanism 3 for driving the valve body 1. Further, the valve body 1 consists of a valve plate 11 and a valve shaft 12 which are formed out of ceramics integrally, and the valve body 1 is supported in a form of a cantilever. The plug member 2 has a shaft hole 24 at the center so that the shaft hole 24 received the valve shaft 12. The outer circumference of the plug member 2 is tapered slightly, and shaped into a truncated cone as a whole. In addition, the plug member 2 has a double structure constituted by a high-strength refractory 21 in the axially front portion and an adiabatic refractory 22 in the axially rear portion. A metal flange 23 for attaching this flow control valve 10 to a leg pipe 100 is firmly fixed to the adiabatic refractory 22 in the axially rear portion. A front end surface 25 of the high-strength refractory 21 in the front portion meets a flow path 101 of the leg pipe 100, and the front end surface 25 is formed into an arc face or a tapered face so as not to disturb the flow of internal fluid. That is, the front end surface 25 is formed so that it substantially meets the inner circumferential surface of the leg pipe 100 when the flow control valve 100 is installed. In addition, a bush 26 supporting the valve shaft 12 rotatably is attached to the inner circumference of the high-strength refractory 21 on the front end side. The bush 26 is made from high-strength ceramics similarly to the valve body 1.

The above-mentioned plug member 2 is formed by pouring the adiabatic refractory 22 into a not-shown molding box in the state that the front-portion high-strength refractory 21 is disposed in advance. The plug member 2 is attached to the metal flange 23 by an anchor bolt (not shown).

In such a manner, the plug member 2 is constituted by the high-strength refractory 21 in the axially front portion and the adiabatic refractory 22 in the axially rear portion. For the high-strength refractory 21, material having a compressive strength of 590 kPa or more is preferable. Examples of such material include high-grade Chamotte monothilic refractory, high alumina monothilic refractory, etc. On the other hand, material having a thermal conductivity of 1.3 kJ/m/h/°C or less is preferable for the adiabatic refractory 22. Examples of such material include vermiculite monothilic refractory, Chamotte monothilic refractory, etc. In this embodiment, the adiabatic refractory 22 is poured into a molding box between the high-strength refractory 21 and the metal flange 23 in the state that the high-strength refractory 21 is precast and incorporated in the valve shaft 12 of the ceramics valve body 1. It is preferable that the valve shaft 12 is coated with release agent in advance so that the adiabatic refractory 22 should not adhere to the valve shaft 12. Accordingly, it is possible to make precise concentricity between the valve shaft 12 of the valve body 1 and the valve hole 24 of the plug member 2.

The valve driving mechanism 3 for driving the valve body 1 is constituted by a first joint portion 31, a second joint portion 32 and an electric motor 33 which are installed on the metal flange 23. The valve shaft 12 is configured to be connected to a driving shaft 34 of the electric motor 33 through these joint portions 31 and 32. The valve shaft 12 projects outside the metal flange 23 so as to be connected to a shaft 36 through a joint 35 in the first joint portion 31. Further, the shaft 36 is connected to a shaft 38 through a universal joint 37 in the first joint portion 31, and the shaft 38 is connected to the driving shaft 34 of the electric motor 33 through a joint 39 in the second joint portion 32. In addition, a water cooling jacket 40 is provided in the first joint portion. The first joint portion 31 is cooled by this water cooling jacket 40.

Next, description will be made about the seal means in this flow control valve 10 with reference to Fig. 3.

First, a first seal member 4 is provided to seal a gap between the plug member 2 and an insertion hole 102 of the leg pipe 100 through which the plug 2 is inserted. Heat resistant fiber, for example, alumina-silica ceramics fiber is used as this first seal member 4, and the fiber is wound on the outer circumferential surface of the truncated cone of the plug member 2. Specifically, the fiber shaped into a blanket is wound on the plug member 2, and the fiber is further fixed by adhesive tape or the like so as to be prevented from being out of position at the time of insertion. The shape of the gap between the first seal member 4 and the insertion hole 102 is tapered, and the initial thickness of the fiber is made larger than the size of the gap, so that the ceramics fiber is compressed uniformly at the time of insertion.

Next, a second seal member 5 is interposed between the above-mentioned metal flange 23 and a fixing seat 103 on the leg pipe 100 side to which the flange 23 is attached. An O-ring is used as the second seal member 5. The allowable temperature of this O-ring is 260°C. However, the plug member 2 has a double structure of the high-strength refractory 21 in the axially front portion and the adiabatic refractory 22 in the axially rear portion as mentioned above, so that heat conduction can be reduced to a low level. According to actual measurements, the temperature was 115°C.

Thus, leakage of hot air, which is a high-temperature high-pressure fluid, from the above-mentioned gap is prevented surely by the double seal structure of the first and second seal members 4 and 5.

Next, a third seal member 6 is provided to seal a gap in a bearing member 27 for the valve shaft 12. A gland packing is used as the third seal member 6. In a conventional structure, spherical bearings made from gun metal have been used in order to support the valve shaft 12, transmit rotation torque smoothly, and absorb the deviation of the shaft center of the valve shaft 12. In the case of spherical bearings, the bearings have a structure that a male part and a female part have a suitable clearance between those parts to slide on each other smoothly. However, there was a case where the temperature of the male part became higher than that of the female part because of heat conduction through a valve shaft, so that the above-mentioned clearance became too narrow to allow smooth rotations. On the other hand, the gland packing is rich in lubricity and has flexibility, so that the gland packing can transmit smooth rotations while absorbing the axial deviation. Further, there arises no problem caused by temperature rise because the allowable temperature of the gland packing is high as 650°C. In addition, the gland packing also has a sealing function, so that a conventional shaft sealing structure is further improved.

The bearing member 27 is attached to a center portion of the metal flange 23. A fitting portion of the bearing member 27 is sealed with an O-ring 28. Further, a space portion 8 sealed with the above-mentioned third seal member 6 and made to communicate with a gap 7 between the valve shaft 12 and the shaft hole 24 of the plug member 2 is provided under this bearing member 27, that is, inside the metal flange 23. This space portion 8 is used to prevent the valve shaft 12 from seizing, as will be described below.

The cartridge-type flow control valve 10 configured thus is, for example, attached to the blast furnace leg pipe 100 in the direction perpendicular to the pipe axis as shown in Fig. 4. At this time, the insertion hole 102 is provided in a side of the leg pipe 100 while a fixing seat 103 which is a hollow metal flange is welded on the outside edge of the insertion hole 102, as shown in Figs. 1 and 2. The insertion hole 102 is a tapered aperture portion which meets the outer circumferential shape of the plug member 2. The insertion hole 102 is provided so as to penetrate an iron shell 104 and an adiabatic monothilic refractory 105 as a lining material of the shell 104 which constitute a flow path wall. The caliber of the inner circumference of the adiabatic monothilic refractory 105 is substantially equal to that of the flow path 101, and just allows the valve plate 11 to move. The height of the fixing surface of the metal fixing seat 103 from the center of the flow path 101 is determined to be equal to the size from the center of the valve plate 11 to the lower surface of the metal flange 23 of the plug member 2.

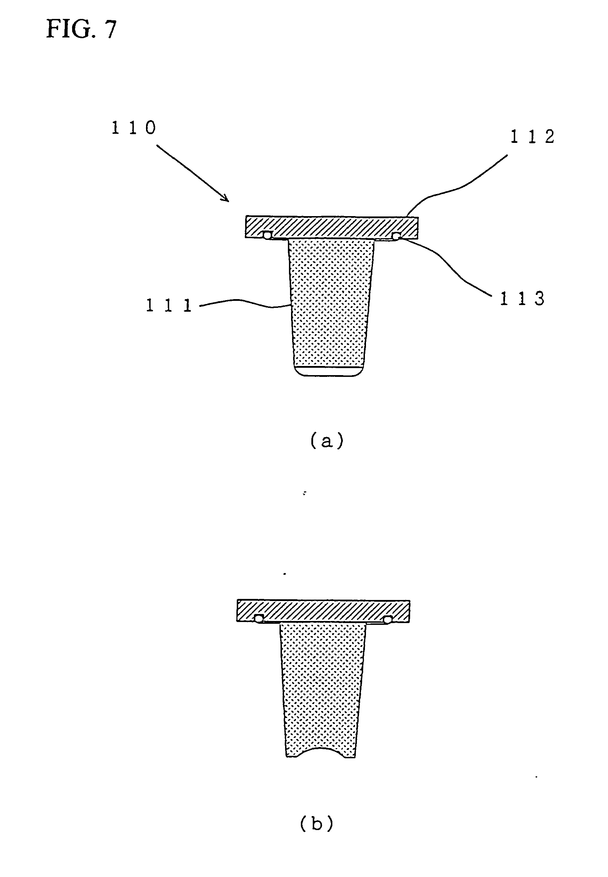

When this flow control valve 10 is to be attached, the first seal member 4 made of ceramics fiber or the like is wound on the outer circumference of the plug member 2 as mentioned above so as to interpose the seal member 4 between the plug member 2 and the insertion hole 102. In this state, the metal flange 23 and the metal fixing seat 103 on the leg pipe 100 are fastened by bolts (not shown) through an O-ring which is the second seal member 5 to install the plug member 2 into the insertion hole 102. When the flow control valve 10 is to be removed, the bolts for the metal flange 23 and the metal fixing seat 103 are removed, and the flow control valve 10 is drawn out. In addition, after the flow control valve 10 is drawn out, the insertion hole 102 is closed with a refractory blind plug 110 as shown in Fig. 7. This blind plug 110 is formed by fixing a metal flange 112 to a refractory plug member 111 shaped into a truncated cone. When the blind plug 110 is used, ceramics fiber (not shown) which is the same as the first seal member is wound in the same manner as mentioned above, and the metal flange 112 is attached to the fixing seat 103 through an O-ring 113 which is the same as the second seal member 5.

It is important that a material such as mortar which sets at a high temperature should not be used for the first seal member 4. In Fig. 4, the reference numeral 107 represents a tuyere, and 108 represents a hot air main pipe.

The flow control valve 10 is thus attached to the leg pipe 100, and, the operation thereof will be described hereunder. When the electric motor 33 in Fig. 1 is operated to rotate the driving shaft 34, the valve shaft 12 is rotated through the joint 39, the shaft 38, the universal joint 37, the shaft 36 and the joint 35. As a result, an angle of the valve plate 11 in the flow path 101 can be changed to control the flow rate of the high-temperature high-pressure fluid. In this flow control valve 10, the valve body 1 is integrally constituted by the valve plate 11 and the valve shaft 12 which are formed out of ceramics, and the plug member 2 is constituted by the high-strength refractory 21 in the axially front portion and the adiabatic refractory 22 in the axially rear portion, as mentioned above. Further, as for the sealing performance which is a problem when the flow control valve 10 is a cartridge type, since the tapered gap in the inserting portion of the plug member 2 is sealed with the first seal member 4 such as ceramics fiber, which is pressed into the tapered gap, and the gap between the fixing seat 103 and the metal flange 23 is sealed with the second seal member 5 constituted by an O-ring, it is possible to prevent the high-temperature high-pressure gas completely from leakage through the gaps by such a double sealing structure. In addition, the gap in the bearing member 27 for the valve shaft 12 is surely sealed with the third seal member 6 constituted by a gland packing. The temperature of the external surface of the metal flange 23 becomes about 180°C in theory on the assumption that the thickness and the heat conductivity of the high-strength refractory 21 of the plug member 2 are 0.1 m and 4.2 kJ/m/h/°C, respectively; the thickness and the heat conductivity of the adiabatic refractory 22 are 0.1 m and 0.84 kJ/m/h/°C, respectively; and high-temperature gas at a temperature of 1,200°C flows through the flow path 101.

This flow control valve 10 is configured in a cartridge type, and has no casing for the valve, differently from conventional ones. Accordingly, the structure is simple, and it is easy to attach and remove the valve to and from pipe arrangement. In addition, it is not necessary to execute the work of changing the leg pipe 100 together when the flow control valve 10 is attached or replaced.

Leg pipes usually have a pipe size of 400 to 600 A. In a conventional structure, in order to attach a flow control valve to a leg pipe, a valve casing with a fixing flange corresponding to 400 to 600 A has to be added to pipe arrangement already laid. However, in the case of a cartridge type, it will go well only if a tapered cross hole is provided in the leg pipe 100 which has been already laid and the fixing seat 103 having a small fixing flange of about Φ 300 mm is set up. Accordingly, the work for alteration of pipe arrangement is simplified on a large scale.

Further, when the valve 1 and the plug member 2 are replaced because of abrasion, a new valve body 1 and a new plug member 2 can be substituted by removing the valve shaft 12 from the joint 35, and removing the first joint portion 31, which is a casing of the valve driving mechanism 3, from the metal flange 23.

### Embodiment 2.

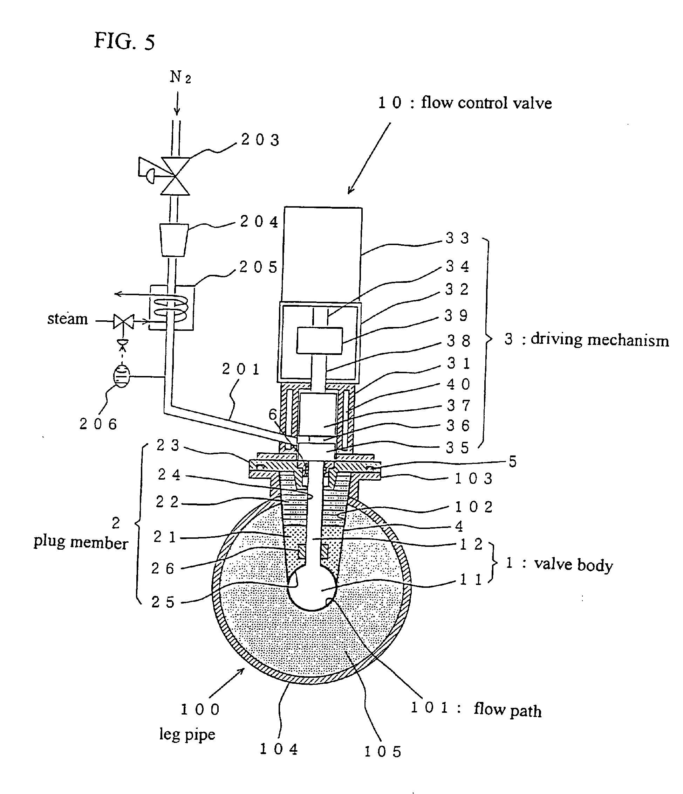

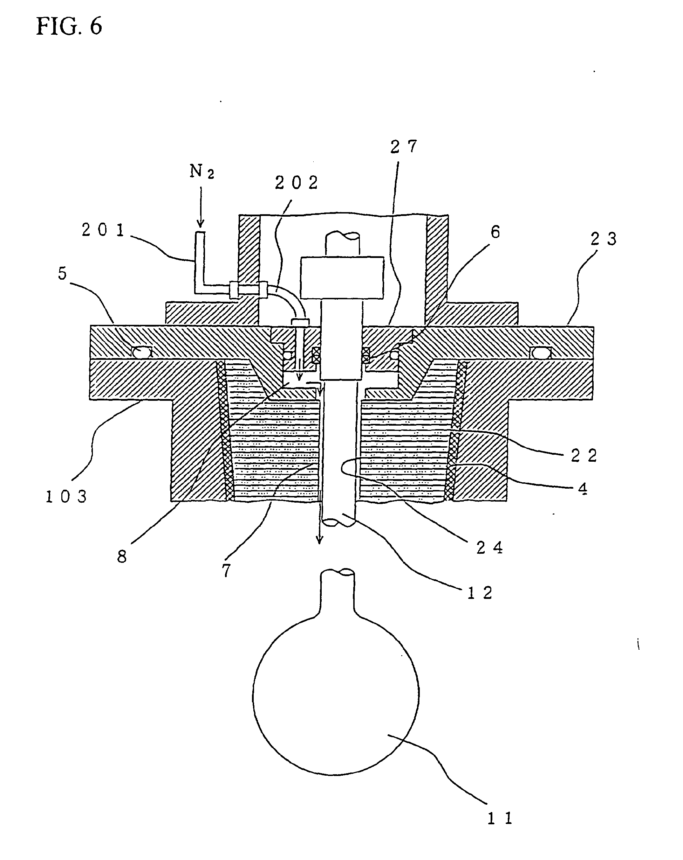

Embodiment 2 of the present invention is shown in Fig. 5. The configuration of the flow control valve 10 is the same as that in the above-mentioned Embodiment 1. Here description will be made about means for heating inert gas such as nitrogen and supplying the heated inert gas to a gap between the valve shaft 12 of the valve body 1 and the shaft hole 24 of the plug member 2. An enlarged view of its main portion is shown in Fig. 6.

As shown in Fig. 6, a certain gap 7 exists usually between the valve shaft 12 of the valve body 1 and the shaft hole 24 of the plug member 2. Because of this gap 7, dirt such as brick dust of the monothilic refractory 105 forming a flow path wall, zinc alkali compounds included in high-temperature high-pressure gas flowing in the leg pipe 100, or the like, enters the gap 7 through the high-temperature high-pressure gas so as to close the gap and adhere thereto. As a result, the valve shaft 12 seize, so that its operation as a valve cannot be performed. In order to prevent such dirt from entering, heated inert gas or the like is allowed to flow into the gap 7.

In Fig. 5, one end of a supply pipe 201 for inert gas is connected to the first joint portion 31 of the valve driving mechanism 3 so that the supply pipe 201 communicates with the above-mentioned space portion 8 through a junction pipe 202 which is inside the valve driving mechanism 3. The other end of the supply pipe 201 is connected to an inert gas source (not shown). In addition, this supply pipe 201 is provided with a pressure-regulating valve 203, a flow meter 204, a heater 205 and a temperature sensor 206. Therefore, the insert gas such as nitrogen is heated to, for example, about 150 to 200°C by the heater 205, and the pressure thereof is increased to a pressure (for example, 150 kPa or less) which is higher in some degree than the pressure inside the flow path 101. The inert gas is then supplied to the gap 7 through the space portion 8, and jetted out into the flow path 101 of the leg pipe 100. In the space portion 8 the gap in the bearing member 27 is sealed with the third seal member 6 as described above, so that the heated inert gas passing through the gap 7 is jetted out into the flow path 101. The flow rate of the inert gas may be, for example, 1 Nm³/H or less. In such a manner, the above-mentioned dirt is prevented from entering, so that the valve shaft 12 is prevented from seizing. It is therefore possible to maintain the stable operation of the valve over a long period of time. The reason why the inert gas is heated is to avoid thermal shock to refractories or the ceramics valve plate 11 as entirely as possible.

Although an example in which inert gas is used is shown in this embodiment, originally clean air or air purified by a filter may be used instead. Therefore, a part of hot air flowing in the flow path 101 may be drawn out, purified by a filter or the like, and thereafter supplied through the above-mentioned space portion 8 into the gap 7.

As has been described above, a flow control valve is configured to be a cartridge type according to the present invention, so that the configuration is simple, and the attachment and removal to and from pipe arrangement is easy. It is therefore possible to obtain a flow control valve at a low price. In addition, the sealing performance which is the gravest problem for the flow control valve formed into a cartridge type can be also ensured satisfactorily by three seal members. Further, it is possible to attach and remove the flow control valve smoothly without damaging refractories forming the flow path wall. In addition, the flow control valve has a structure in which the axial deviation of a valve shaft is not only lowered but also absorbed easily, so that the rotating operation of a valve body can be performed smoothly. In addition, since alteration on a large scale in pipe arrangement which has been already laid is not necessary and the flow control valve can be easily attached to and removed from the pipe arrangement, the maintenance performance-can be greatly improved.

Further, by supplying heated inert gas or air to a gap between a valve shaft and a shaft hole of a plug member, it is possible to prevent the valve shaft from seizing, so that the stable operation of the valve can be maintained over a long period of time.

## Claims

1. A flow control valve for high-temperature high-pressure fluid comprising:
a valve body (1) consisting of a valve plate (11) and a valve shaft (12) integrally formed out of ceramics and supported in a form of a cantilever;
a plug member (2) constituted by a refractory to rotatably insert said valve shaft, said plug member (2) being insertable into an aperture portion (102) provided through an adiabatic monothilic refractory (105) constituting a wall of a flow path (101);
a fixing member (23) made of metal which can be fixed to a fixing seat (103) provided at said aperture portion (102); and
a valve driving means (3) fixable to said fixing member (23) on the opposite side to the side on which said plug member (2) of said fixing member (23) is fixed, wherein
said flow control valve is of a cartridge type detachable to said aperture portion (102) in which a caliber of an inner circumference of said adiabatic monothilic refractory (105) constituting a flow path wall of a leg pipe (100) is substantially equal to a caliber of said flow path(101), and
said flow control valve further comprises:
a first seal member (4) attached to an outer circumferential surface of said plug member (2);
a second seal member (5) inserted between said fixing member (23) and said fixing seat (103); and
a third seal member (6) attached to a bearing member (27) provided in said fixing member (23) for said valve shaft (12).

2. A flow control valve for high-temperature high-pressure fluid according to claim 1, wherein said plug member (2) is constituted in a double structure in which an axially front portion of said plug member is a high-strength refractory while an axially rear portion thereof is an adiabatic refractory.

3. A flow control valve for high-temperature high-pressure fluid according to claim 1, wherein said plug member (2) is formed into a tapered truncated cone.

4. A flow control valve for high-temperature high-pressure fluid according to claim 1, wherein said first seal member (4) is made out of heat-resistant fiber.

5. A flow control valve for high-temperature high-pressure fluid according to claim 1, wherein said valve driving means (3) and said valve shaft (12) are connected by a joint means.

6. A method of preventing the valve shaft (12) from seizing for a flow control valve according to any of claims 1 to 5, said method comprising supplying heated gas to a gap between said valve shaft (12) and said shaft hole of said plug member (2).

7. A flow control valve for high-temperature high-pressure fluid according to claim 1, wherein a space portion sealed with said third seal member (6) and communicating with a gap between said valve shaft (12) and said shaft hole of said plug member (2) is provided inside said fixing member (23), and means for supplying heated gas is connected to said space portion.

## Patentansprüche

1. Durchflussregelventil für Fluid für Hochtemperatur- und Hochdruckbereich, welches folgendes umfasst:
einen Ventilkörper (1) bestehend aus einer Ventilscheibe (11) und einem Ventilschaft (12), integral ausgebildet aus Keramik und abgestützt in einer Form eines einseitig eingespannten Trägers,
ein Absperrorgan (2), ausgebildet durch einen hitzebeständigen drehbaren Einsatz für den Ventilschaft, wobei das Absperrorgan (2) in einen Öffnungsbereich (102) einführbar ist, welcher durch einen adiabatischen monolithischen Feuerfeststoff (105), der eine Wand eines Durchflusspfades (101) darstellt, gebildet wird,
ein Befestigungselement (23) aus Metall, welches an einem Befestigungssitz (103) befestigt werden kann, wobei dieser an dem Öffnungsbereich (102) vorgesehen ist, und
ein Ventilantriebsmittel (3), fixierbar an dem Befestigungselement (23) an der gegenüberliegenden Seite, relativ zu der Seite, an welcher das Absperrorgan (2) des Befestigungselementes (23) befestigt ist, worin
das Durchflussregelventil ein Typ mit Patrone ist, lösbar von dem Öffnungsbereich (102), in welchem ein Durchmesser eines inneren Kreisumfangs des adiabatischen monolithischen Feuerfeststoffes (105) einen Durchflusspfad in einer Wand eines Kniestückes (100) darstellt, im wesentlichen gleich ist mit einem Durchmesser des Durchflusspfades (101), und
wobei das Durchflussregelventil weiterhin umfasst:
ein erstes Dichtelement (4), welches an einer äußeren Umfangsoberfläche des Absperrorgans (2) angebracht ist,
ein zweites Dichtelement (5), welches zwischen dem Befestigungselement (23) und dem Befestigungssitz (103) eingeführt ist, und
- ein drittes Dichtelement (6), befestigt an einem Lagerelement (27), welches in dem Befestigungselement (23) für den Ventilschaft (12) vorhanden ist.

2. Durchflussregelventil für Fluid für Hochtemperatur- und Hochdruckbereich nach Anspruch 1, worin das Absperrorgan (2) in einer Doppelstruktur dargestellt ist, in welcher ein axiales Frontteil des Absperrorgans ein hochfester Feuerfeststoff ist, während ein axial rückwärtiger Teil ein adiabatischer Feuerfeststoff ist.

3. Durchflussregelventil für Fluid für Hochtemperatur- und Hochdruckbereich nach Anspruch 1, worin das Absperrorgan (2) ausgebildet ist in Form eines sich verjüngenden, stumpfförmigen Konus.

4. Durchflussregelventil für Fluid für Hochtemperatur- und Hochdruckbereich nach Anspruch 1, worin das erste Dichtelement (4) aus einer hitzebeständigen Faser hergestellt ist.

5. Durchflussregelventil für Fluid für Hochtemperatur- und Hochdruckbereich nach Anspruch 1, worin das Ventilantriebsmittel (3) und der Ventilschaft (12) miteinander durch ein Verbindungsmittel verbunden sind.

6. Verfahren zur Vermeidung einer Verklemmung an einem Durchflussregelventil entsprechend einem der Ansprüche 1 bis 5, wobei das Verfahren vorsieht, Heizgas an einer Lücke zwischen dem Ventilschaft (12) und der Schafthöhlung des Absperrorgans (2) zuzuführen.

7. Durchflussregelventil für Fluid für Hochtemperatur- und Hochdruckbereich nach Anspruch 1, worin ein Raumbereich, welcher durch das dritte Dichtelement (6) abgedichtet ist und in Verbindung steht mit einer Lücke zwischen dem Ventilschaft (12) und der Schafthöhlung des Absperrorgans (2) innerhalb des Befestigungselementes (23) vorhanden ist und Mittel zur Zuführung von erhitztem Gas mit dem Raumbereich verbunden ist.

## Revendications

1. Soupape de régulation de débit pour du fluide à haute température et haute pression, comprenant :
◆ un corps de soupape (1) se composant d'une plaque porte-soupape (11) et d'un arbre de soupape (12) formé de manière solidaire avec des céramiques et supporté sous la forme d'un porte-à-faux ;
◆ un élément formant bouchon (2) constitué par un matériau réfractaire pour insérer de manière rotative ledit arbre de soupape, ledit élément formant bouchon (2) étant insérable dans une partie d'ouverture (102) prévue à travers un réfractaire monolithique adiabatique (105) constituant une paroi d'une trajectoire d'écoulement (101) ;
◆ un élément de fixation (23) réalisé à partir de métal, qui peut être fixé sur un siège de fixation (103) prévu au niveau de ladite partie d'ouverture (102) ; et
◆ des moyens d'entraînement de soupape (3) pouvant être fixés sur ledit élément de fixation (23) du côté opposé au côté sur lequel ledit élément formant bouchon (2) dudit élément de fixation (23) est fixé, dans lequel :
◆ ladite soupape de régulation de débit est du type à cartouche détachable de ladite partie d'ouverture (102) dans laquelle un calibre d'une circonférence interne dudit matériau réfractaire monolithique adiabatique (105) constituant une paroi de trajectoire d'écoulement d'un tube à pieds (100) est sensiblement égal à un calibre de ladite trajectoire d'écoulement (101), et
◆ ladite soupape de régulation de débit comprend en outre :
◆ un premier élément de joint d'étanchéité (4) fixé sur une surface circonférentielle externe dudit élément formant bouchon (2) ;
◆ un deuxième élément de joint d'étanchéité (5) inséré entre ledit élément de fixation (23) et ledit siège de fixation (103) ; et
◆ un troisième élément de joint d'étanchéité (6) fixé sur un élément de palier (27) prévu dans ledit élément de fixation (23) pour ledit arbre de soupape (12).

2. Soupape de régulation de débit pour du fluide à haute température et haute pression selon la revendication 1, dans laquelle ledit élément formant bouchon (2) est constitué par une double structure dans laquelle une partie axialement avant dudit élément formant bouchon est un réfractaire à haute résistance alors que sa partie axialement arrière est un réfractaire adiabatique.

3. Soupape de régulation de débit pour du fluide à haute température et haute pression selon la revendication 1, dans laquelle ledit élément formant bouchon (2) est formé en cône tronqué progressivement rétréci.

4. Soupape de régulation de débit pour du fluide à haute température et haute pression selon la revendication 1, dans laquelle ledit premier élément de joint d'étanchéité (4) est réalisé avec une fibre résistante à la chaleur.

5. Soupape de régulation de débit pour du fluide à haute température et haute pression selon la revendication 1, dans laquelle lesdits moyens d'entraînement de soupape (3) et ledit arbre de soupape (12) sont raccordés par des moyens de joint.

6. Procédé pour empêcher le coincement dudit arbre de soupape (12), pour une soupape de régulation de débit selon l'une quelconque des revendications 1 à 5, ledit procédé comprenant l'étape consistant à alimenter du gaz chauffé jusqu'à un espace entre ledit arbre de soupape (12) et ledit trou d'arbre dudit élément formant bouchon (2).

7. Soupape de régulation de débit pour du fluide à haute température et haute pression selon la revendication 1, dans laquelle une partie d'espace rendue étanche avec ledit troisième élément de joint d'étanchéité (6) et communiquant avec un espace entre ledit arbre de soupape (12) et ledit trou d'arbre dudit élément formant bouchon (2) est prévue à l'intérieur dudit élément de fixation (23), et des moyens pour alimenter le gaz chaud sont raccordés à ladite partie d'espace.
